# EUROPEAN PATENT APPLICATION

(11) **EP 0 606 653 A1**
(43) Date of publication of application: **20.07.1994**
(21) Application number: 93121107.2
(22) Date of filing: 30.12.1993
(51) Int. Cl.: G11C 7/00, G06F 15/78

(54) **Field programmable distributed processing memory**

(30) Priority: 04.01.1993 US 319
(71) Applicant: TEXAS INSTRUMENTS INCORPORATED, Dallas Texas 75265 (US)
(72) Inventor: Harward, Mark G., Dallas, Texas 75231 (US)
(74) Representative: Schwepfinger, Karl-Heinz, Dipl.-Ing.

(57) **Abstract**

A field programmable distributed processing memory comprises a first memory array and a second memory array. Further, a field programmable data path is coupled to both the first and second memory arrays. The field programmable data path is capable of performing data processing functions.

## Description

### RELATED APPLICATION

This application is related to patent application Serial No. 07\498,235 filed March 16, 1990 (Attorney's Docket No. TI-13437), and assigned to the assignee of this application.

### TECHNICAL FIELD OF THE INVENTION

This invention relates in general to the field of distributed computational data processes. More particularly, the present invention relates to a field programmable distributed processing memory.

### BACKGROUND OF THE INVENTION

Numerous novel computer architecture designs have been proposed to overcome problems often encountered in the typical von Neumann architecture. It has been found that the addition of multiple processors to accomplish parallel processing is a difficult and complex task while the addition of memories for a single processor is generally trivial. The use of multiple processors made system bus access arbitration a necessity. In addition, the inability to provide adequate input/output (I/O) bus bandwidth from memory to each processor leads to ineffective use of available CPU cycles. Thus, the processing power of present parallel processing systems are limited by bus or I/O bandwidth.

Research in the field of parallel processing has attempted to overcome the difficulties inherent with general purpose parallel processing hardware and software. In parallel processing, a problem must first be divided into segments of smaller and similar sized problems to be solved by the multiple processors. The problem segmentation task which must effectively utilize the multiple processors of a massive parallel processing machine has proven to be complex and not satisfactorily resolved. This, in addition to other problems, indicates that the immediate solution to processing speed is application specific systems designed to solve readily segmented problems.

As computer system size grows, mismatch occurs between computation power and memory size. Several computational tasks such as digital signal processing require computational cycles proportional to system size. A scheme based on providing computation capability to memories has been known for many years, but has been largely ignored because of the non-von Neumann computer architecture involved. A recent version of this smart memory has been developed by Oxford Computers and is described in Cushman, "Matrix Crunching with Massive Parallelism," *VLSI Systems Design,* pp. 18-32 (December 1988), and Morton, "Intelligent Memory Chip Competes with Optical Computing," *Laser Focus World*, pp. 163-164 (April 1989). However, this smart memory is limited by serial writes from the central processor to the memory chips and severe constraints on logic complexity.

Accordingly, it has become desirable to provide a smart memory which performs distributed processing to increase processing speeds. In addition, it is desirable to provide a smart distributed processing memory which is field programmable so that the logic functions and other computations it performs may be user programmable.

### SUMMARY OF THE INVENTION

In accordance with the present invention, apparatus and a method for are provided which substantially eliminate or reduce disadvantages and problems associated with prior circuits.

In one aspect of the present invention, a field programmable distributed processing memory comprises a first memory array and a second memory array. Further, a field programmable data path is coupled to both the first and second memory arrays. The field programmable data path is capable of performing data processing functions.

In another aspect of the present invention, a distributed processing system comprises a central processing unit, and a plurality of field programmable distributed processing memories coupled to the central processing unit, and which performs distributed and parallel processing functions.

An important technical advantage of the present invention is the provision for field programmability in distributed processing memory devices or smart memory devices. Constructed in this manner, these devices can have a general architecture and yet be made application specific by the field programming capability.

### BRIEF DESCRIPTION OF THE DRAWINGS

For a better understanding of the present invention, reference may be made to the accompanying drawings, in which:
FIG. 1 is a simplified block diagram of a system employing multiple field programmable distributed processing memories;
FIG. 2 is a simplified block diagram of a field programmable distributed processing memory;
FIG. 3 is a more detailed block diagram of a field programmable distributed processing memory;

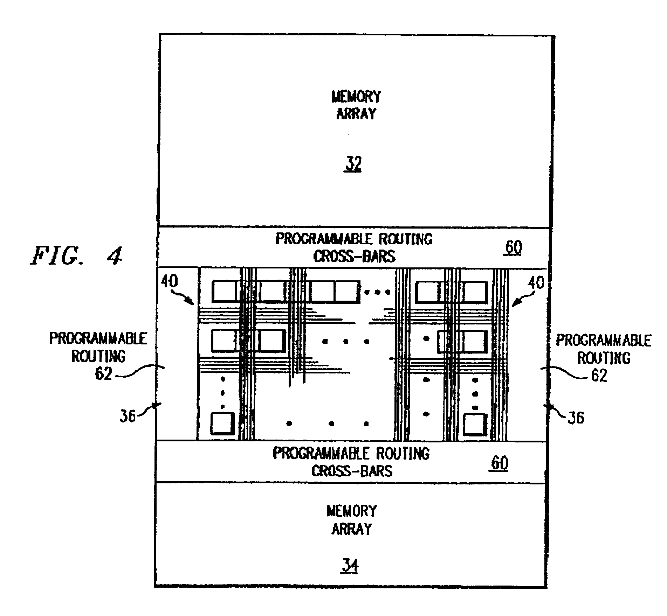

FIG. 4 is a more detailed block diagram of the field programmable data path control portion of the distributed processing memory; and
FIG. 5 is a more detailed diagram of the field programmable data path and programmable interconnects and routing lines.

### DETAILED DESCRIPTION OF THE INVENTION

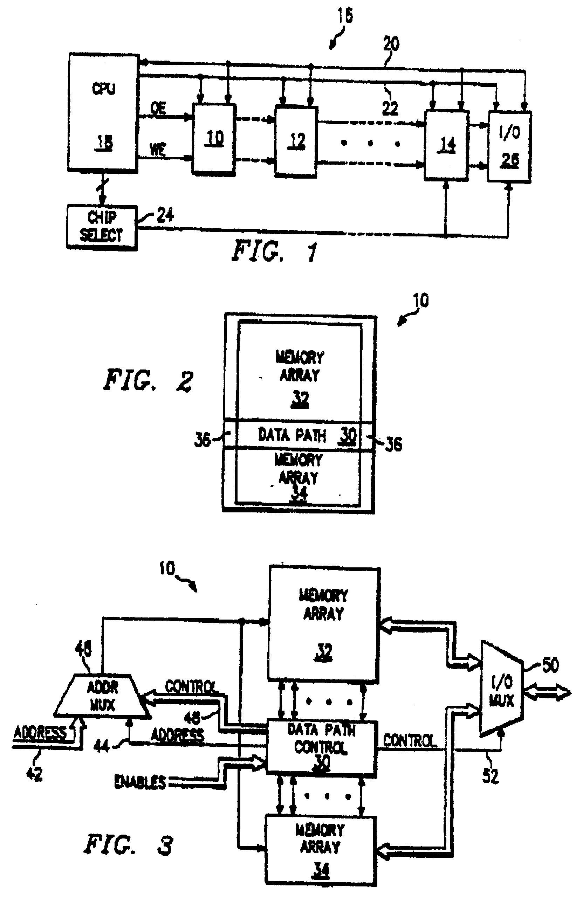

With reference to the drawings, FIG. 1 is a block diagram showing field programmable distributed processing memories 10, 12,...,14 as part of a system 16 which includes a central processing unit (CPU) 18, a multi-bit data bus 20, an address bus 22, a chip select decoder 24, and an I/O block 26. CPU 18 may be a simple processor, such as a Motorola 6800 or Intel 8080, with Write Enable and Ready signals for controlling each of the memories 10-14. System 16 is particularly adapted for computation intensive applications such as digital signal processing, although it is also capable of performing general purpose processing.

Referring to FIG. 2, each memory 10-14 is in fact a dual memory with an embedded field programmable data path 30. The dual memory includes a first memory array 32 and a second memory array 34. The embedded field programmable data path 30 includes field programmable application specific logic that uses input data stored in the memory arrays 32 and 34 and then stores data processed by data path 30 in arrays 32 and 34. In addition, field programmable distributed processing memory 10 includes control circuits 36 that control both the field programming of the data path 30 and the operation of the chip 10.

Embedding logic in the memory chip provides the on-chip advantages of low cost bandwidth and very fast memory access. Further, the memory array 34 allows the system 16 to simultaneously use each field programmable memory's data path for massively parallel distributed computation.

As FIGs. 2 and 3 show, each memory 10-14 includes three major circuit blocks with the preferred dimensions:
a) The 2K x 8 SRAM memory array 32,
b) The field programmable data path 30, and
c) The 256 x 8 SRAM memory array 34.

The conventional method of memory system Chip Select is shown in FIG. 1 where the CPU 18 provides five high order address bits to perform Chip Select decoding. The first preferred embodiment method of Chip Select also uses the five high order address bits decoding for memory array 32 access but uses a register on each chip for access to the memory array 34. The programmable Memory array 34 position in CPU address space is set using an Initialization register (the "CSB register") (not shown) on each chip 10. This CSB register could also be a field programmable rather than simply a value stored in a conventional register.

Initialization of the CSB registers may be used to partition the system of chips 10-14 into groups for response to broadcast transmissions from the CPU 18. Initialization may be performed by the CPU 18 at any time, allowing simple system reconfiguration. Initialization is performed on individual chips 10-14 sequentially by writing to a series of two special addresses a number of times. This event is required to occur sequentially a number of times to eliminate the probability of random occurrence of writes to memory array 32 appearing as Initialization. An event counter (not shown) on each chip 10-14 detects the sequence and then data on the data bus (20) is written to the CSB register which defines the group for the chip. The clock (not shown) for the event counter is supplied by an Address Transition Detection (ATD) circuit (not shown) that pulses once for every address change. Recall that the usual five high order address hit chip select singles out one chip at a time for this CSB register write during Initialization, but is inactive during broadcast instruction detection.

All field programmable distributed processing memory chips 10-14 view the activity on the address bus 22, allowing its use for the broadcast of instructions. The design allows the simultaneous interrogation for instructions by all chips 10-14 as the five high order address bit chip select is not required to be active for instruction interrogation. The group indentity is included in the broadcast instruction and only the chips in the requested group respond to the command. The instruction field is 11 bits for the 2K x 8 organization of the first preferred embodiment chips; the first three bits specify the command, one of the next five bits generate the ATD signal, and the last three bits define the group the chip belongs to by comparison with the stored value in the CSB register. For example, the following table shows a possible encoding with RRR a designation for the group:

| Instruction | Address bits |
|---|---|
| Begin Broad Write Mode | 000 00001 RRR |
| | 000 00000 RRR |
| Terminate Broadcast Write Mode | 001 00001 RRR |
| | 001 00000 RRR |
| Begin Local Computation | 010 00001 RRR |
| | 010 00000 RRR |
| Begin Self-Test Mode | 011 00001 RRR |
| | 011 00000 RRR |
| Interrupt Local Computation | 100 00001 RRR |
| | 100 00000 RRR |

A chip's event counter is incremented when the control logic 36 senses a sequential occurrence of: the data on the address bus agrees with an instruction, the middle bits are as expected, and the requested group matches the group set in the CSB register. The event counter is satisfied when it reaches a statistically derived number of sequential events. The control logic circuitry 36 then begins the requested operation for all chips in that group.

For example, suppose that the system has been initialized into four broadcast groups: 000, 001, 010, and 011. To instruct group 001 to Begin Broadcast Write Mode, CPU 18 would first Read an arbitrary chip's 000 00001 001 address, then Read address 000 00000 001 to provide an ATD generated clock pulse which causes the event counter to increment on all chips in group 001. A sequence of such Reads satisfies the event counter in each chip in group 001, which informs the on-chip control logic to perform the requested command 000 (Begin Broadcast Write Mode). In this instruction, the memory array 34 chip select (CSB) for all chips in group 001 would become active. Then CPU 18 can execute a series of normal write cycles which will write to the memory array 34 of each chip in group 001 simultaneously. One chip may have both CSB and Chip Select for the memory array 32 (CSD) active during Broadcast Write Mode, so the on-chip logic interprets this as a write to the chip's memory array 34. When CPU 18 completes the Broadcast Write task, it repeats the process but with the instruction now to Terminate Broadcast Write Mode by putting 001 00001 001 on the address bus. This informs the chips in group 001 to deactivate CSB and go into a normal mode.

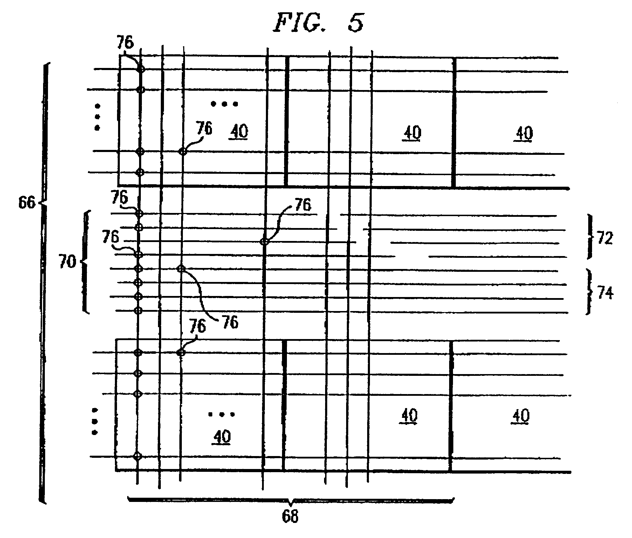

FIG. 3 is a more detailed view of field programmable distributed processing memory 10. Memory 10 includes an array of 128 columns of 128 cells, for example. The memory array 34 is essentially a 128 X 16 section of memory array 32. An array of configurable logic cells 40 and interconnections make up the data path and control 30 and 36. Both memory arrays 32 and 34 are addressed by incoming address signals 42 and internally generated addresses 44 which is selected by an address multiplexer 46 controlled by internally generated control signals 48. The input to and output from memory arrays 32 and 34 are controlled by an input/output multiplexer 50, which is further controlled by internally generated control signals 52. Configurable logic cells 40, data path and control 30 and 36 are composed of programmable elements (FIG. 5), the states of which configure the field programmable distributed processing memory 10.

Configurable logic cells 40 may be implemented by a variety of technologies and methods typically used in the Field Programmable Gate Array (FPGA) devices. For example, the Universal Logic Module approach recommended by X. Chen and S. L. Hurst (please refer to the numerous articles published by these authors, for example, "A Comparison of Universal-Logic-Module Realizations and Their Application in the Synthesis of Combinatorial and Sequential Logic Networks," *IEEE Transactions on Computers*, Vol. c-13, no. 2, February 1982.); the Logic Cell Array architecture by XILINX of San Jose, California; and other architectures made and marketed by Concurrent Logic of Sunnyvale, California, Pilkington Microelectronics Ltd. of Cheshire, U.K., etc. The configurable logic cells 40 can thus be programmable in a suitable manner consistent with the architecture employed.

The configurable logic cells 40, programmable routing cross-bars 60 and programmable routing 62 in the data path 30 are programmed by the user to perform the application specific data processing. The programmable routing cross-bars and routing 60 and 62 are programmable to route the data stored in memory arrays 32 and 34 in a predetermined manner to predetermined configurable logic cells 40 for application specific processing. Many other routing architectures have been published and could be employed accordingly. When two or three metal level technology is used, the routing lines 60 and 62 may be laid directly on top of configurable logic cells 40, thus conserving precious real estate.

Referring to FIG. 5, configurable logic cells 40 are shown in a matrix arrangement with vertical and horizontal routing lines 66 and 68. The horizontal routing lines make up a horizontal routing channel 70, in which a predetermined set of horizontal routing lines is segmented 72 and a predetermined set is non-segmented 74. The segmentation allows for computational and logical division between functions performed by predetermined configurable logic cells 40. A plurality of programmable elements 76 determine the interconnection of the routing lines 66 and 68 thereby determining the manner in which the configurable logic cells are connected to one another and to the memory arrays 32 and 34. In addition, the state of the programmable elements 76 also determines the function the configurable logic cells must perform. The programmable elements may be implemented by a number of semiconductor memory architecture, such as SRAM, EPROM, PROM, EEPROM, flash EEPROM memory cell-based, and seimiconductor technology, such as CMOS, fuse-based, antifuse-based.

Constructed in this manner, distributed processing memory devices are made field programmable, so that the functions they perform are application specific. Large volumes of distributed processing memories can thus be manufactured since they are not restricted by the type of data processing performed.

Although the present invention has been described in detail, it should be understood that various changes, substitutions and alterations can be made thereto without departing from the spirit and scope of the present invention as defined by the appended claims.

## Claims

1. A field programmable distributed processing memory, comprising:
a first memory array;
a second memory array; and
a field programmable data path coupled to both said first and second memory arrays, said field programmable data path performing data processing functions.

2. The memory, of claim 1, wherein said field programmable data path comprises:
field programmable configurable logic cells for data processing; and
a plurality of routing lines programmable interconnecting said field programmable configurable logic cells and said first and second memory arrays.

3. The memory, of claim 2, wherein said configurable logic cells and programmably inter-connectable routing lines are field programmable by configuring a plurality of programmable elements.

4. The memory, of claim 3, wherein said programmable elements are CMOS SRAMs.

5. The memory, of claim 3, wherein said programmable elements are antifuse-based.

6. The memory, of claim 3, wherein said programmable elements are EEPROM memory cell-based.

7. The memory, of claim 3, wherein said programmable elements are flash EEPROM memory cell-based.

8. The memory, of claim 3, wherein said programmable elements are EPROM cell-based.

9. The memory, of any of claims 2 to 8, wherein said programmable elements in conjunction with said programmable routing lines form a field programmable gate array.

10. A distributed processing system, comprising:
a central processing unit; and
a plurality of field programmable distributed processing memories according to any preceding claim wherein said memories are coupled to said central processing unit.
